# EUROPÄISCHE PATENTSCHRIFT

(11) **EP 3 857 681 B1**
(45) Veröffentlichungstag und Bekanntmachung des Hinweises auf die Patenterteilung: **12.01.2022**
(21) Anmeldenummer: 19769759.2
(22) Anmeldetag: 13.09.2019
(51) Int. Cl.: H02K 3/51, H02K 3/50

(54) **ROTOR FÜR EINE ELEKTRISCHE MASCHINE**
ROTOR FOR AN ELECTRIC MACHINE
ROTOR POUR UNE MACHINE ÉLECTRIQUE

(30) Priorität: 28.09.2018 DE 102018124011
(43) Veröffentlichungstag der Anmeldung: 04.08.2021
(73) Patentinhaber: Voith Patent GmbH, 89522 Heidenheim (DE)
(72) Erfinder: HILDINGER, Thomas, 06543-150 Santana (BR); KÖDDING, Ludger, 89518 Heidenheim (DE); WECKERT, Michael, 73432 Aalen (DE); VESER, Stefan, 89558 Böhmenkirch-Treffelhausen (DE); ALLGEYER, Stefan, 73469 Riesbürg (DE); HENNING, Holger, 89537 Giengen (DE); EILEBRECHT, Philipp, 89522 Heidenheim (DE)
(74) Vertreter: Voith Patent GmbH - Patentabteilung
(86) Internationale Anmeldenummer: PCT/EP2019/074469
(87) Internationale Veröffentlichungsnummer: WO 2020/064364

(56) Entgegenhaltungen:
- EP-A2- 0 736 953
- CN-A- 104 218 715
- CN-U- 204 046 299

## Beschreibung

Die vorliegende Erfindung betrifft einen Rotor für eine elektrische Maschine, insbesondere für eine läufergespeiste Schleifringläufermaschine, wie sie für drehzahlregelbare Wasserkraft-Motor-Generatoren für Pumpspeicherkraftwerke zum Einsatz kommen.

Die DE 10 2010 020 415 A1 offenbart einen Rotor, welcher für einen drehzahlregelbaren Wasserkraft-Motor-Generator geeignet ist. Der in dieser Schrift offenbarte Rotor umfasst Wicklungselemente, welche in axial verlaufenden Nuten eines Rotorkörpers angeordnet sind, einen Wickelkopf, welcher axial neben dem Rotorkörper angeordnet ist, wobei in dem Bereich des Wickelkopfes die Wicklungselemente in axialer Richtung aus den Nuten austreten, dann in einem Winkel zur axialen Richtung verlaufen und dann im Bereich ihrer axialen Enden wieder in axialer Richtung verlaufen und mit weiteren Wicklungselementen verbunden sind, und einen Wickelkopfträger, welcher radial innerhalb des Wickelkopfs angeordnet ist, wobei der Wickelkopf über Zugbolzen, mit dem Wickelkopfträger verbunden ist.

EP 0 736 953 A2, CN 104 218 715 A und JP S59 135050 U offenbaren ähnliche Rotoren, deren Wickelköpfe durch mehr als zwei Zugbolzenreihen gehalten werden.

Es hat sich gezeigt, dass für sehr schnell drehende Maschinen (> 550 Umdrehungen pro Minute), die Festigkeit der aus der DE 10 2010 020 415 A1 bekannten Befestigung des Wickelkopfes nicht mehr ausreicht. Die Anwendung der vorliegenden Erfindung ist jedoch nicht auf sehr schnell drehende Maschinen beschränkt, falls der Fachmann eine Anwendung aus anderen Gründen ins Auge fassen sollte, z.B. zur Erhöhung der allgemeinen Lebensdauer oder zur Vergrößerung der Sicherheitsmargen im Betrieb.

Die Erfinder haben sich die Aufgabe gestellt, einen Rotor für eine elektrische Maschine anzugeben, dessen Wickelkopfbefestigung eine höhere Festigkeit als die aus dem Stand der Technik bekannte Lösung aufweist.

Die gestellte Aufgabe wird durch einen Rotor für eine elektrische Maschine mit den Merkmalen von Anspruch 1 gelöst. Vorteilhafte Ausführungsformen ergeben sich aus den von Anspruch 1 abhängigen Unteransprüchen.

Die erfindungsgemäße Lösung wird nachfolgend anhand von Figuren erläutert. Darin ist im Einzelnen folgendes dargestellt:
- Figur 1: Erfindungsgemäßer Rotor im Bereich des Wickelkopfes;
- Figur 2: Erfindungsgemäßer Rotor im Bereich des Wickelkopfes in Seitenansicht.

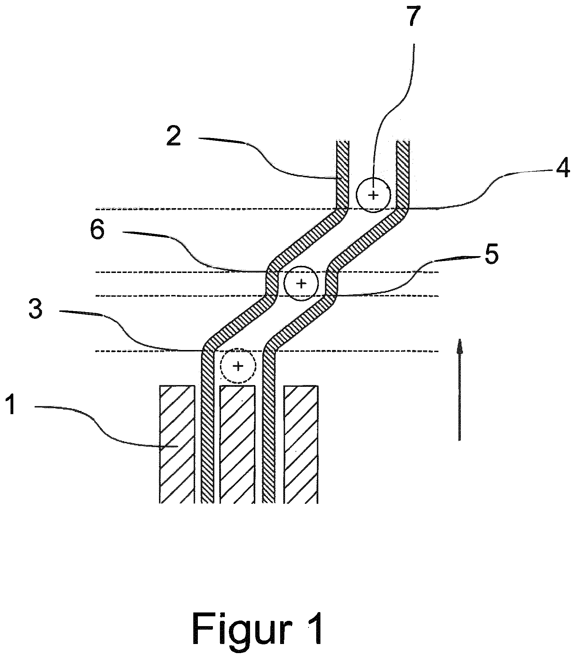

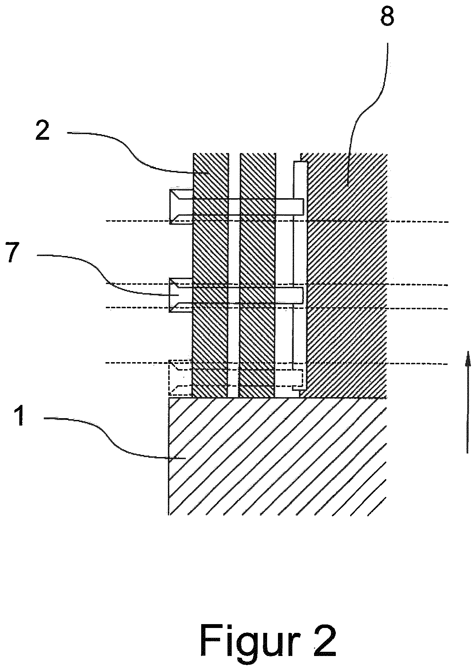

Figur 1 zeigt in sehr schematischer Darstellung einen erfindungsgemäßen Rotor im Bereich des Wickelkopfes. Der Rotor umfasst einen Rotorkörper, welcher mit 1 bezeichnet ist. Der Rotorkörper 1 wird dabei durch drei schraffierte Rechtecke angedeutet, welche eine gleiche Anzahl von Zähne des Rotorkörpers darstellen, zwischen welchen die axial verlaufenden Nuten des Rotorkörpers 1 angeordnet sind. Die axiale Richtung des Rotors ist dabei durch den Pfeil angedeutet. Der Wickelkopf ist axial neben dem Rotorkörper 1 angeordnet. Der Rotor umfasst eine Vielzahl von Wicklungselementen, von denen in Figur 1 nur zwei dargestellt sind, und wovon ein Wicklungselement mit 2 bezeichnet ist. In der Regel sind in einem gattungsgemäßen Rotor pro Nut zwei Wicklungselemente 2 in Betrachtungsrichtung hintereinander angeordnet (vgl. z.B. die Figur 3 der DE 10 2010 020 415 A1 und Figur 2). Der Übersichtlichkeit halber zeigt die Figur 1 nur die in Richtung des Betrachters vorn liegenden Wicklungselemente 2. Im Bereich des Wickelkopfes treten die Wicklungselemente 2 aus den Nuten in axialer Richtung heraus. Die Enden der Wicklungselemente 2 verlaufen in axialer Richtung. Jedes Wicklungselement 2 weist im Bereich des Wicklungskopfes eine erste und eine zweite Krümmung auf, wobei die erste Krümmung mit 3 und die zweite Krümmung mit 4 bezeichnet sind. Dabei ist jeweils die erste Krümmung 3 auf einer ersten zur axialen Richtung senkrechten Ebene angeordnet, und jeweils die zweite Krümmung 4 auf einer zweiten zur axialen Richtung senkrechten Ebene angeordnet. Die genannten Ebenen sind dabei durch die entsprechenden horizontalen gestrichelten Linien angedeutet. Die erste Ebene liegt näher am Rotorkörper 1 als die zweite Ebene. Der Rotor umfasst eine Vielzahl von Zugbolzen und einen Wickelkopfträger (in Figur 1 nicht dargestellt). Die Zugbolzen verbinden den Wickelkopf mit dem Wickelkopfträger, wobei die Zugbolzen den Wickelkopf radial durchdringen. Einige der Zugbolzen sind in Figur 1 durch die Kreise angedeutet, wovon einer mit 7 bezeichnet ist. Einige der Zugbolzen 7 sind so angeordnet, dass die Bolzenachse derselben in axialer Richtung des Rotors zwischen der zweiten Ebene und den Enden der Wicklungselemente 2 angeordnet ist. Die Bolzenachse ist in Figur 1 jeweils durch ein kleines Kreuz angedeutet.

Jedes Wicklungselement 2 weist ferner im Bereich des Wicklungskopfes eine dritte und eine vierte Krümmung auf, wobei die dritte Krümmung mit 5 und die vierte Krümmung mit 6 bezeichnet sind. Dabei ist jeweils die dritte Krümmung 5 auf einer dritten zur axialen Richtung senkrechten Ebene angeordnet, und jeweils die vierte Krümmung 6 auf einer vierten zur axialen Richtung senkrechten Ebene angeordnet. Die dritte und die vierte Ebene liegen in axialer Richtung zwischen der ersten und der zweiten Ebene, wobei sich die dritte Ebene näher an der ersten Ebene befindet als die vierte Ebene. Einige der Zugbolzen 7 sind so angeordnet, dass die Bolzenachse derselben in axialer Richtung des Rotors zwischen der dritten Ebene und der vierten Ebene angeordnet ist.

Optional können einige der Zugbolzen 7 sind so angeordnet sein, dass die Bolzenachse derselben in axialer Richtung des Rotors zwischen der ersten Ebene und dem Rotorkörper 1 angeordnet ist.

Dabei schließen alle genannten Bereichsangaben für die Lage der Bolzenachsen jeweils die genannten Endpunkte mit ein, insofern es sich dabei um die genannten Ebenen handelt.

Zwischen der ersten und der dritten Ebene verlaufen die Wicklungselemente 2 in einem Winkel zur axialen Richtung. Zwischen der vierten und der zweiten Ebene verlaufen die Wicklungselemente 2 in einem Winkel zur axialen Richtung. Dabei müssen die genannten Winkel nicht notwendigerweise gleich groß sein, obwohl dies in Figur 1 der Fall ist. Zwischen der dritten und der vierten Ebene verlaufen die Wicklungselemente 2 in axialer Richtung (wie in Figur 1 gezeigt) oder in einem Winkel zur axialen Richtung, wobei dieser Winkel jeweils kleiner ist als die Winkel, unter der die Wicklungselemente 2 zwischen der ersten und der dritten und zwischen der vierten und der zweiten Ebene verlaufen.

Die Anbindung der Zugbolzen 7 an die Wicklungselemente 2 und den Wickelkopfträger kann auf jede aus dem Stand der Technik bekannte Weise erfolgen. In Figur 2 ist eine mögliche Ausführungsform gezeigt, welche in Bezug auf die Anbindung der Zugbolzen 7 der technischen Lehre der DE 10 2010 020 415 A1 folgt, welche eine sehr gute Kühlung der Wicklungselemente 2 ermöglicht. Dabei zeigt Figur 2 in sehr schematischer Darstellung einen erfindungsgemäßen Rotor im Bereich des Wickelkopfes in einem Schnitt, welcher die Seitenansicht der Wicklungselemente 2 ermöglicht. Die waagrechten gestrichelten Linien deuten die senkrecht zur axialen Richtung verlaufenden Ebenen an, auf welchen sich die oben beschriebenen Krümmungen der Wicklungselemente 2 befinden. In der Seitenansicht von Figur 2 sind die Krümmungen selbst nicht zu erkennen. Die Bezeichnungen entsprechen den Bezeichnungen in Figur 1. Figur 2 zeigt außerdem den Wickelkopfträger, welcher mit 8 bezeichnet ist. Für die Details der Anbindung der Zugbolzen 7 an die Wicklungselemente 2 und den Wickelkopfträger 8 sei auf die DE 10 2010 020 415 A1 verwiesen.

Im Vergleich zum Stand der Technik weisen die Wicklungselemente 2 im Bereich des Wickelkopfes zwei zusätzliche Krümmungen auf. Schon dadurch erhält der Wickelkopf eine höhere Festigkeit. Die Festigkeit kann optional weiter durch eine zusätzliche dritte Reihe von Zugbolzen 7 erhöht werden.

## Patentansprüche

1. Rotor für eine elektrische Maschine mit Wicklungselementen (2), welche in axial verlaufenden Nuten eines Rotorkörpers (1) angeordnet sind, einem Wickelkopf, welcher axial neben dem Rotorkörper (1) angeordnet ist, wobei in dem Bereich des Wickelkopfes die Wicklungselemente (2) in axialer Richtung aus den Nuten austreten und im Bereich ihrer axialen Enden in axialer Richtung verlaufen, wobei jedes Wicklungselement (2) im Bereich des Wicklungskopfes eine erste und eine zweite Krümmung (3, 4) aufweist, wobei jeweils die erste Krümmung (3) auf einer ersten zur axialen Richtung senkrechten Ebene angeordnet, und jeweils die zweite Krümmung (4) auf einer zweiten zur axialen Richtung senkrechten Ebene angeordnet ist, wobei die erste Ebene näher am Rotorkörper (1) liegt als die zweite Ebene, und wobei der Rotor eine Vielzahl von Zugbolzen (7) und einen Wickelkopfträger (8) umfasst, wobei die Zugbolzen (7) den Wickelkopf mit dem Wickelkopfträger (8) verbinden, wobei die Zugbolzen (7) den Wickelkopf radial durchdringen, und wobei einige der Zugbolzen (7) so angeordnet sind, dass die Bolzenachse derselben in axialer Richtung des Rotors zwischen der zweiten Ebene und den Enden der Wicklungselemente (2) angeordnet ist,
**dadurch gekennzeichnet, dass** jedes Wicklungselement (2) im Bereich des Wicklungskopfes eine dritte und eine vierte Krümmung (5, 6) aufweist, wobei jeweils die dritte Krümmung (5) auf einer dritten zur axialen Richtung senkrechten Ebene angeordnet, und jeweils die vierte Krümmung (6) auf einer vierten zur axialen Richtung senkrechten Ebene angeordnet ist, und wobei die dritte und die vierte Ebene in axialer Richtung zwischen der ersten und der zweiten Ebene liegen, und wobei sich die dritte Ebene näher an der ersten Ebene befindet als die vierte Ebene, und wobei einige der Zugbolzen (7) so angeordnet sind, dass die Bolzenachse derselben in axialer Richtung des Rotors zwischen der dritten Ebene und der vierten Ebene angeordnet ist, und wobei die Wicklungselemente (2) zwischen der ersten und der dritten Ebene in einem Winkel zur axialen Richtung verlaufen, und wobei die Wicklungselemente (2) zwischen der vierten und der zweiten Ebene in einem Winkel zur axialen Richtung verlaufen, und wobei die Wicklungselemente (2) zwischen der dritten und der vierten Ebene in einem Winkel zur axialen Richtung verlaufen, wobei der letztgenannte Winkel jeweils kleiner ist als die Winkel, unter der die Wicklungselemente (2) zwischen der ersten und der dritten und zwischen der vierten und der zweiten Ebene verlaufen.

2. Rotor nach Anspruch 1, wobei die Wicklungselemente (2) zwischen der dritten und der vierten Ebene in axialer Richtung verlaufen.

3. Rotor nach Anspruch 1 oder 2, wobei einige der Zugbolzen (7) so angeordnet sind, dass die Bolzenachse derselben in axialer Richtung des Rotors zwischen der ersten Ebene und dem Rotorkörper (1) angeordnet ist.

## Claims

1. Rotor for an electrical machine with winding elements (2), which are arranged in axially extending grooves of a rotor body (1), a winding head, which is arranged axially adjacent to the rotor body (1), wherein in the region of the winding head the winding elements (2) emerge from the grooves in the axial direction and extend in the axial direction in the region of their axial ends, each winding element (2) having a first and a second curvature (3, 4) in the region of the winding head, in each case the first curvature (3) being arranged on a first plane perpendicular to the axial direction and in each case the second curvature (4) being arranged on a second plane perpendicular to the axial direction, the first plane being closer to the rotor body (1) than the second plane, and the rotor comprising a plurality of tension bolts (7) and a winding head support (8), wherein the tension bolts (7) connect the winding head to the winding head support (8), wherein the tension bolts (7) radially penetrate the winding head, and wherein some of the tension bolts (7) are arranged such that the bolt axis thereof is located in the axial direction of the rotor between the second plane and the ends of the winding elements (2),
**characterized in that** each winding element (2) has a third and a fourth curvature (5, 6) in the region of the winding head, in each case the third curvature (5) being arranged on a third plane perpendicular to the axial direction, and in each case the fourth curvature (6) being arranged on a fourth plane perpendicular to the axial direction, and wherein the third and the fourth planes are located between the first and the second planes in the axial direction, and wherein the third plane is located closer to the first plane than the fourth plane, and wherein some of the tension bolts (7) are so arranged that the pin axis thereof is arranged in the axial direction of the rotor between the third plane and the fourth plane, and wherein the winding elements (2) extend between the first and the third plane at an angle to the axial direction, and wherein the winding elements (2) extend between the fourth and the second plane at an angle to the axial direction, and wherein the winding elements (2) extend between the third and the fourth plane at an angle to the axial direction, the latter angle being smaller in each case than the angle at which the winding elements (2) extend between the first and the third and between the fourth and the second plane.

2. The rotor of claim 1, wherein the winding elements (2) extend between the third and fourth planes in the axial direction.

3. Rotor according to claim 1 or 2, wherein some of the tension bolts (7) are arranged such that the bolt axis thereof is located in the axial direction of the rotor between the first plane and the rotor body (1).

## Revendications

1. Rotor pour une machine électrique avec des éléments d'enroulement (2) qui sont disposés dans des rainures s'étendant axialement d'un corps de rotor (1), une tête d'enroulement qui est disposée axialement à côté du corps de rotor (1), les éléments d'enroulement (2) sortant des rainures dans la direction axiale dans la zone de la tête d'enroulement et s'étendant dans la direction axiale dans la zone de leurs extrémités axiales, chaque élément d'enroulement (2) présentant dans la zone de la tête d'enroulement une première et une deuxième courbure (3, 4), la première courbure (3) étant disposée sur un premier plan perpendiculaire à la direction axiale, et respectivement la deuxième courbure (4) est disposée sur un deuxième plan perpendiculaire à la direction axiale, le premier plan étant plus proche du corps de rotor (1) que le deuxième plan, et le rotor comprenant une pluralité de boulons de traction (7) et un support de tête d'enroulement (8), dans lequel les boulons de traction (7) relient la tête d'enroulement au support de tête d'enroulement (8), dans lequel les boulons de traction (7) traversent radialement la tête d'enroulement, et dans lequel certains des boulons de traction (7) sont disposés de telle sorte que l'axe de boulon de ceux-ci est situé dans la direction axiale du rotor entre le deuxième plan et les extrémités des éléments d'enroulement (2),
**caractérisé en ce que** chaque élément d'enroulement (2) présente, dans la zone de la tête d'enroulement, une troisième et une quatrième courbure (5, 6), la troisième courbure (5) étant disposée sur un troisième plan perpendiculaire à la direction axiale, et la quatrième courbure (6) étant disposée sur un quatrième plan perpendiculaire à la direction axiale, et dans lequel les troisième et quatrième plans sont situés entre les premier et deuxième plans dans la direction axiale, et dans lequel le troisième plan est plus proche du premier plan que le quatrième plan, et dans lequel certains des boulons de traction (7) sont disposés de telle manière, de sorte que leur axe de boulon est situé dans la direction axiale du rotor entre le troisième plan et le quatrième plan, et dans lequel les éléments d'enroulement (2) s'étendent entre le premier et le troisième plan selon un angle par rapport à la direction axiale, et dans lequel les éléments d'enroulement (2) s'étendent entre le quatrième et le deuxième plan selon un angle par rapport à la direction axiale, et dans lequel les éléments d'enroulement (2) s'étendent entre le troisième et le quatrième plan selon un angle par rapport à la direction axiale, ce dernier angle étant respectivement inférieur à l'angle selon lequel les éléments d'enroulement (2) s'étendent entre le premier et le troisième plan et entre le quatrième et le deuxième plan.

2. Rotor selon la revendication 1, dans lequel les éléments d'enroulement (2) s'étendent dans la direction axiale entre le troisième et le quatrième plan.

3. Rotor selon la revendication 1 ou 2, dans lequel certains des boulons de traction (7) sont disposés de telle sorte que leur axe de boulon est situé entre le premier plan et le corps de rotor (1) dans la direction axiale du rotor.
